Europäisches Patentamt

(19) European Patent Office    (11) Veröffentlichungsnummer: **0 083 003**

Office européen des brevets    **B1**

(12) **EUROPÄISCHE PATENTSCHRIFT**

(45) Veröffentlichungstag der Patentschrift:    (51) Int. Cl.⁴: **C 04 B  38/06,** C 08 L  75/08 //
19.06.85                                           C08K5/01 ,(C08L75/08, 91:00)

(21) Anmeldenummer: 82111459.2

(22) Anmeldetag: 10.12.82

(54) **Wässrige Zubereitung und ihre Verwendung bei der Herstellung keramischer Massen.**

(30) Priorität: 24.12.81 DE 3151373

(43) Veröffentlichungstag der Anmeldung:
06.07.83 Patentblatt 83/27

(45) Bekanntmachung des Hinweises auf die Patenterteilung:
19.06.85 Patentblatt 85/25

(84) Benannte Vertragsstaaten:
AT BE DE FR GB IT NL

(56) Entgegenhaltungen:
DE - A - 2 014 948
FR - A - 1 497 665
FR - A - 2 172 590
US - A - 3 390 212

(73) Patentinhaber: BAYER AG, Konzernverwaltung RP
Patentabteilung, D-5090 Leverkusen 1 Bayerwerk (DE)

(72) Erfinder: Drinkuth, Franz, Gruener Weg 6,
D-5068 Odenthal 2 (DE)
Erfinder: von Bonin, Wulf, Dr., Mendelssohnstrasse 30,
D-5090 Leverkusen 1 (DE)
Erfinder: Schäpel, Dietmar, Dr., Johanniterstrasse 15,
D-5000 Koeln 80 (DE)
Erfinder: Lorenz, Artur, Raiffeisenstrasse 2,
D-7750 Konstanz-Litzelstetten (DE)

## Beschreibung

Ziegel für die Bauindustrie werden im allgemeinen aus Ton, teilweise unter Mitverwendung von Lehm, Sand, gemahlenem und gebranntem Ton und/oder anderen mineralischen Stoffen hergestellt. Hierzu werden die Komponenten in dem Aufbereitungsprozeß homogenisiert, indem sie unter Hinzufügen von Wasser intensiv gemischt werden. Eine gute Homogenisierung der Tonmasse ist zur Erzielung hoher Festigkeitswerte der Ziegel notwendig. Um die erhaltene feuchte Tonmasse verpressen zu können, wird eine von der Art des Tons und der Konstruktion der Presse abhängige spezielle Materialsteife eingestellt, wie es z. B. von Leusden, Ziegeleitechnisches Jahrbuch, 1974, Seiten 172—226, Bau-Verlag, Wiesbaden, beschrieben ist. Die aufbereitete Masse wird in der Presse zu Formlingen gepreßt, die nach anschließendem Trocknungs- und Brennprozeß den Ziegel ergeben.

Tone im Sinne der vorliegenden Erfindung sind solche Materialien, wie sie in der Baustoffe und Baumaterialien sowie in der Keramik herstellenden Industrie üblicherweise verwendet werden, d. h. die sehr feinkörnige Lockergesteine darstellen, die durch Verwitterung feldspatreicher Gesteine entstanden als typische Vertreter der bindigen Böden anzusehen sind. Die bindigen Eigenschaften zeigen sich in einem Aneinanderhaften der einzelnen Teilchen, so daß eine zusammenhängende Masse entsteht, die in feuchtem Zustand plastisch ist und beim Austrocknen fest und leicht rissig wird.

Kompakte Ziegel besitzen ein hohes Gewicht und eine hohe Wärmeleitfähigkeit. Es sind verschiedene Verfahren bekannt, um Ziegel mit geringerem Gewicht und verringerter Wärmeleitfähigkeit zu erhalten. So werden z. B. Hochloch- und Gitterziegel sowie über die gesamte Masse porosierte Ziegelarten hergestellt. Für die Ziegelposierung werden bekannterweise organische Partikel in Form von Polystyrolperlen, Sägemehlen u. a. Feststoffen, die im Brennprozeß ausbrennen und nur wenig bzw. keine Asche hinterlassen, verwendet.

Obwohl die bekannten Porosierungsverfahren die Porosität des Ziegelscherbens günstig beeinflussen, sind sie teilweise mit erheblichen Mängeln behaftet. Durch die Porosierung des Scherbens sinkt die Ziegelfestigkeit unverhältnismäßig stark ab.

Es zeigt sich auch, daß die Verwendung trockener Porosierungsstoffe die Materialaufbereitung erschwert.

Nachteilig ist bei Verwendung von z. B. Polystyrolpartikeln der hohe Verlust bei der Aufbereitung. Dieser Nachteil kann durch die im Herstellprozeß möglichst späte Zugabe der Polystyrolperlen, z. B. in der Presse, behoben werden. Dies führt aber im allgemeinen zu einer ungenügenden Vermischung des Porosierungsstoffes mit der Tonmasse. Ein weiterer Mangel dieses Verfahrens ist die elastische Rückverformung der Polystyrolperlen nach Austritt des Formlings aus dem Pressenmundstück.

Die Nachteile von Porosierungsverfahren bei Verwendung von sonstigen hydrophilen Feststoffen, wie z. B. Sägemehlen und Sägespänen, sind ebenfalls durch den Porosierungsstoff bedingt. Es ist bekannt, daß die Wasseraufnahme bei Ton eine Quellung hervorruft. Im Umkehrfall schwindet Ton bei der Trocknung, bis sich eine Feuchte von ca. 5 bis 10% eingestellt hat und dann fast nicht mehr. Holz zeigt im Prinzip gleiches Verhalten. Hier beginnt das wesentliche Schwinden erst bei Trocknung unter 10% Feuchte, so daß die Holzpartikel das Schwinden des Tons behindern und dessen Gefüge durch entstehende Mikrorisse stören. Am deutlichsten zeigt sich dieser Mangel, wenn Holzpartikel und Ton nach dem Mischen der Masse verpreßt werden und die Holzpartikel noch Wasser aufnehmen können. In diesem Fall entziehen sie dem Ton des Formlings Wasser und quellen nach, der Ton dagegen schwindet, so daß aufgrund des gegenläufigen Verhaltens beider Komponenten die Rißbildung verstärkt auftritt. Diese Tatsache führt zu einer erheblichen Minderung der Ziegelfestigkeit und erlaubt daher keine weitere Gewichtsreduzierung bei großen Ziegelformaten.

Es ist auch schon vorgeschlagen worden (z. B. US-A-3 390 212), Altöl, Schweröl oder ähnliche ausbrennbare flüssige organische Substanzen als Porosierungsmittel im Aufbereitungsprozeß der Ziegelrohmasse zuzusetzen. Dieser Vorschlag hat sich bisher aufgrund der damit erzielbaren geringen Porosierung und der Schwierigkeiten, eine gleichmäßige, homogene Einarbeitung in die Tonmassen zu erzielen, ohne unzumutbare Abwandlungen der Aufbereitungsprozesse und -maschinen vornehmen zu müssen, nicht durchgesetzt.

Es ist weiterhin bekannt (z. B. FR-A-1 497 665), daß wäßrige Lösungen von Polymeren wie Polyacrylamid oder Cellulosederivaten oder auch Polymerdispersionen bei der Verarbeitung von keramischen Massen als Plastifizierhilfsmittel eine gewisse Wirkung entfalten und gegebenenfalls zu Scherben mit schwach reduziertem Raumgewicht führen.

Außerdem sind Methoden entwickelt worden, keramische Schlicker nach Zusatz von Tensiden durch Einschlagen von Luft in poröse Formkörper zu überführen. Dieses Verfahren konnte sich jedoch beim Einsatz auf dem Ziegeleisektor nicht einführen, da in den Verarbeitungsmaschinen eine unkontrollierbare Zerstörung der Luftschaumstruktur erfolgt und wie beim Zusatz von expandierten Polystyrolperlen eine elastische Rückverformung des unter hohen Druck aus der Strangpresse austretenden Formlings erfolgt.

Der vorliegenden Erfindung lag der Wunsch zugrunde, ein Hilfsmittel aufzufinden, das die durch Verarbeitungsschwierigkeiten, Plastizitätsverlust, elastische Rückverformung des Strangpreßlings und Verlust an Endfestigkeit bedingten Nachteile der bisher bekannten Porosierungsverfahren für keramische Massen, insbesondere grobkeramischer Massen wie Tonziegeln, vermeidet und im Gegenteil sowohl als Verarbeitungshilfe wie auch wenig festigkeitsminderndes Porosierungsmittel bei einfacher Handhabung brauchbar ist.

Es wurde gefunden, daß diese Forderungen in überraschend günstiger Weise gemeinsam erfüllbar sind, wenn man als Porosierungshilfsmittel wäßrige Zubereitungen gelartiger Konsistenz, die Öl und/ oder pulverförmige Füllstoffe sowie hydrophile Polyurethane enthalten, verwendet.

Der technische Vorteil des vorgeschlagenen Verfahrens besteht nicht nur darin, daß es zu porosierten keramischen Massen mit in Hinblick auf den erzielbaren hohen Porosierungsgrad überraschend hohen Festigkeiten führt, sondern es zeigt sich auch, daß der Zusatz der erfindungsgemäßen Porosierungsmittel den Homogenisierungsprozeß z. B. der Tonmasse überraschend erleichtert, zu guten Plastizitäten bei gleichzeitig ausgezeichnetem Verhalten auf den Verformungsmaschinen für die Rohmassen führt und darüber hinaus auch noch den Trocknungsprozeß der Formteile beschleunigt, ohne zu vermehrter Rißbildung Anlaß zu geben.

In besonderem Maße ermöglicht das vorgeschlagene Verfahren große als Euroblock mit den Abmessungen von 30 cm Breite, 49 cm Länge und 23,8 cm Höhe wie in Bild 1 skizziert, bekannte oder größere Blöcke mit dünneren Zwischenstegen, z. B. 4 mm Dicke, herzustellen und die Anzahl der parallel zur Wandrichtung möglichen Lochreihen auf 22 Reihen bei 30 cm dicken Blöcken zu erhöhen, was zu höherem Wärmedämmvermögen und zu geringerem Gewicht der Blöcke führt.

Es hat sich gezeigt, daß die im Rahmen des erfindungsgemäßen Porosierungsverfahrens zu verwendenden wäßrigen Zubereitungen des angegebenen Aufbaus eine gelartige Konsistenz mit hoher Homogenität und zeitlicher Dispersionsstabilität besitzen, die sie befähigen, eine über das Maß des eingebauten Öl- bzw. pulvrigen Feststoffanteils hinausgehende Porosierung bei gleichzeitig hervorragenden Verarbeitungsverhalten der damit versetzten keramischen Rohmassen zu erzeugen.

Die als Porosierungsmittel dienenden wäßrigen Zubereitungen enthalten erfindungsgemäß:

A) 1—15 Gew.-% hydrophile Polyurethane,
B) gegebenenfalls bis zu 3 Gew.-% hydrophile, wasserlösliche oder wasserquellbare Polymerisate auf Basis von Polypeptiden; Polysacchariden wie Casein, Gelatine, Alginate, Carrageenate, Xanthane, Stärken, Chitin; Cellulosen wie Carboxymethylcellulose, Methylcellulose oder Hydroxyethylcellulose, und Polymere auf Basis von ungesättigten Monomeren wie Polyvinylalkohole,
C) gegebenenfalls bis zu 2 Gew.-% Tenside,
D) gegebenenfalls bis zu 30 Gew.-% pulverförmige Füllstoffe,
E) 0,3—30 Gew.-% Öl

und Wasser enthalten.

Die Erfindung betrifft ferner die Verwendung der Zubereitungen als Porosierungsmittel von keramischen Massen. Die Verwendung ist dadurch gekennzeichnet, daß man die ölhaltigen, wäßrigen Zubereitungen mit gelartiger Konsistenz den keramischen Rohmassen während des Aufbereitungsprozesses als Zusatzmittel zumischt.

Erfindungsgemäß werden als Komponente A der Zubereitung kovalent vernetzte hydrophile Polyurethane verstanden, die durch Umsetzung von Prepolymeren und/oder Semiprepolymeren mit Wasser erhältlich sind. Die Prepolymere und Semiprepolymere weisen Isocyanatendgruppen auf und werden in an sich bekannter Weise durch Umsetzung von Polyethern, die mindestens 30 Gew.-% Ethylenoxid-Einheiten enthalten, mit einer überschüssigen Menge an Di- und/oder Polyisocyanat hergestellt. Bei dieser Umsetzung wird die Menge an Di- und/oder Polyisocyanat vorzugsweise so bemessen, daß das NCO/OH-Verhältnis in Abhängigkeit von den gewünschten Eigenschaften des herzustellenden Prepolymer-Typs 2 bis 10 beträgt. Der Gehalt des Prepolymers bzw. Semiprepolymers an Isocyanatgruppen beträgt vorteilhaft 2 bis 10 Gew.-%, vorzugsweise 3 bis 5 Gew.-%, bezogen auf das Gewicht des Prepolymers bzw. Semiprepolymers.

Ausgangsmaterial für die Prepolymere bzw. Semiprepolymere sind mindestens zwei aktive Wasserstoffatome aufweisende Polyether mit einem Molekulargewicht von 500 bis 10 000, vorzugsweise 2000 bis 8000, die mindestens 30 Gew.-% an Ethylenoxidgruppen, bezogen auf das Gewicht des Polyethers, eingebaut enthalten. Derartige Polyether werden durch Umsetzung von Verbindungen mit reaktionsfähigen Wasserstoffatomen, z. B. Di- oder Polyalkoholen, Di- oder Polyphenolen, aliphatischen oder aromatischen Di- oder Polyaminen, mit Ethylenoxid und gegebenenfalls Alkylenoxiden wie Propylenoxid, Butylenoxid, Styroloxid, Epichlorhydrin oder Gemischen dieser Alkylenoxide hergestellt.

Weitere Ausgangsverbindungen für die Prepolymere bzw. Semiprepolymere sind aliphatische, cycloaliphatische, araliphatische, aromatische oder heterocyclische Polyisocyanate, wie sie z. B. von W. Siefgen, Liebigs Annalen der Chemie, Band 562, Seiten 75—136, beschrieben werden.

Die Menge an Prepolymer, die zur Bildung der in den erfindungsgemäßen Zubereitungen enthaltenen hydrophilen Polyurethane erforderlich ist, beträgt 1—15 Gew.-%, besonders bevorzugt 1,5—6 Gew.-%, bezogen auf das Gesamtgewicht der Zubereitung.

Als Komponente B der erfindungsgemäßen Zubereitungen kommen Polymere auf Basis von Polypeptiden; Polysacchariden wie Casein, Gelatine, Alginate, Carrageenate, Xanthane, Stärken, Chitin; Cellulosen wie Carboxymethylcellulose, Methylcellulose oder Hydroxyethylcellulose, und Polymere auf Basis von ungesättigten Monomeren wie Polyvinylalkohole, in Betracht. Diese Komponenten B

3

können allein oder im Gemisch miteinander eingesetzt werden.

Die Menge der gegebenenfalls mitverwendeten Komponenten B in den erfindungsgemäßen Zubereitungen beträgt 0,05—3 Gew.-%, vorzugsweise 0,1—1,5 Gew.-%, besonders bevorzugt 0,2—0,8 Gew.-%, bezogen auf das Gesamtgewicht der Zubereitung.

Unter der in den erfindungsgemäßen Zubereitungen gegebenenfalls mitzuverwendenden Komponente C sind Netzmittel ionischer oder nichtionischer Natur und Emulgatoren zu verstehen.

Unter der Vielzahl der prinzipiell für diesen Einsatzbereich geeigneten, dem Stande der Technik entsprechenden Stoffgruppen wie z. B. Sulfonaten von Aromaten, Aliphaten oder Araliphaten, Sulfonsäureestern, Tauraten, quarternäre Ammoniumverbindungen, Ethylenoxidmischpolymerisaten z. B. mit Propylenoxid, Salzen von Fettsäuren, bzw. deren komplexen Estern, Fettalkoholen, Zuckerestern, Ethylenoxidanlagerungsprodukten an hydrophobe Alkohole, Amine oder Fettsäuren haben sich in besonderem Maße Anlagerungsprodukte von Ethylenoxid an Isononylphenol bewährt, wie z. B. das Anlagerungsprodukt von 8—15 Mol Ethylenoxid an Isononylphenol, weil derartige Tenside relativ wenig empfindlich gegen ionische Störstoffe sind, wie sie gegebenenfalls in keramischen Massen zu erwarten sind.

Die Menge der Komponente C beträgt bis zu 2 Gew.-%, vorzugsweise 0,02—1 Gew.-%, besonders bevorzugt 0,03—0,5 Gew.-%, bezogen auf das Gesamtgewicht der Zubereitung.

Die in den erfindungsgemäßen Zubereitungen gegebenenfalls mitzuverwendenden weiterhin als Komponente D enthaltenen Pulver können Stäube und Mehle auf organischer und anorganischer Basis sein, die zum überwiegenden Anteil eine Teilchengröße von höchstens 90 μm aufweisen.

Unter der Vielzahl der prinzipiell für diesen Einsatzbereich geeigneten Substanzen, wie z. B. Mehle aus Schalen und/oder Früchten von Oliven, Nüssen und Hülsenfrüchten, Stroh, Baumrinden und Holz, hat sich in besonderem Maße Kohlenstaub, der sowohl bei der Steinkohlenaufbereitung als auch bei der Braunkohlenverarbeitung anfällt oder aus diesen Kohlearten durch Mahlen hergestellt sein kann, bewährt.

Als Pulver anorganischer Basis kommen z. B. Calciumcarbonat, Bimssteinmehl oder silikatische Produkte, wie z. B. Kurzglasfaser, Mikroperlen, Mikrohohlperlen, Kieselsäure oder Glasmehl, in Frage.

Die Menge der Komponente D beträgt bis zu 30 Gew.-%, vorzugsweise 2,5 Gew.-%, besonders bevorzugt 8—15 Gew.-%, bezogen auf das Gesamtgewicht der wäßrigen Zubereitung.

Unter den als Komponente E erfindungsgemäß vorhandenen Ölen werden fließfähige organische Substanzen mit Viskositäten bei 75°C unter $10^4$ cp (mPa · s) verstanden, vor allen allerdings die üblicherweise als Öle verstandenen CHO- bzw. CH-Verbindungen. Es kann sich um cyclische oder lineare, aromatische, araliphatische oder aliphatische, tierische, pflanzliche oder mineralische oder synthetische Öle handeln.

In besonderem Maße werden preiswerte aus z. B. aus Ölfrüchten oder Erdöl zugängliche Kohlenwasserstofföle eingesetzt, wie z. B. die verschiedenen Heizölfraktionen, die Schmierölfraktionen, bzw. entsprechende Alt- und Abfallöle oder auch sonstige technische Öle, wie z. B. sogenanntes Paraffinöl, Weißöl oder auch Spindelöl, das sich besonders gut eignet.

Das in den wäßrigen Zubereitungen enthaltene Öl sollte Tröpfchendurchmesser zwischen 0,1 und 100 μm besitzen, vorzugsweise zwischen 1,0 und 50 μm. Für die erfindungsgemäßen wäßrigen Zubereitungen werden vorzugsweise Öle mit Siedepunkten über 100°C, insbesondere über 200°C, eingesetzt.

Die Menge der in den erfindungsgemäßen Zubereitungen enthaltenen Öle beträgt 0,3—30 jGew.-%, vorzugsweise 1—20 Gew.-%, besonders bevorzugt 1,5—15 Gew.-%, bezogen auf das Gesamtgewicht der wäßrigen Zubereitung.

Diese Öle können allein oder im Gemisch miteinander eingesetzt werden, wobei insgesamt die genannten Mengen einzusetzen sind. Eine Überschreitung der angegebenen Einsatzmenge ist zwar prinzipiell von seiten der Herstellung der wäßrigen Zubereitungen möglich, ist aber in bezug auf den dann in den keramischen Vorformlingen angereicherten Gehalt an organischem Material nicht mehr empfehlenswert. Wenn die angegebenen Ölgehalte unterschritten werden, dann hat sich gezeigt, daß ein verschlechtertes Verarbeitungsverhalten der zu porosierenden Rohmassen resultiert.

Die Herstellung der erfindungsgemäß als Porosierungsmittel zu verwendenden wäßrigen Zubereitungen von Ölen kann diskontinuierlich oder kontinuierlich erfolgen.

Zweckmäßigerweise wird erst eine Zubereitung der Komponente E, gegebenenfalls B, C und D in Wasser hergestellt und dann die Komponente A hinzugerührt. Es ist aber auch möglich, alle Komponenten gemeinsam oder auch in Form ihrer Lösungen in einem Mischaggregat zusammenzuführen. Es ist auch in Betracht zu ziehen, daß man zunächst eine Art rieselfähiges, pulvriges oder flüssiges Konzentrat herstellt und dieses durch Zusatz der jeweils noch benötigten weiteren Menge an Komponenten, z. B. Wasser, vor der Verwendung auf die gewünschte Einsatzkonzentration einstellt.

Die wäßrigen Ölzubereitungen werden den keramischen Rohmassen zur Porosierung in Mengen von 5 bis 50, bevorzugt 8 bis 40, insbesondere 10 bis 35 Gew.-%, bezogen auf keramische Rohmischung, zugemischt. Der Zusatz des Porosierungsmittels kann prinzipiell auf jeder Stufe des Aufbereitungsverfahrens für die Rohmassen erfolgen, zweckmäßigerweise natürlich während des Homogenisierungsprozesses, ob dieser nun durch Rundbeschicker, Kneter oder Schneckenmaschinen erfolgt.

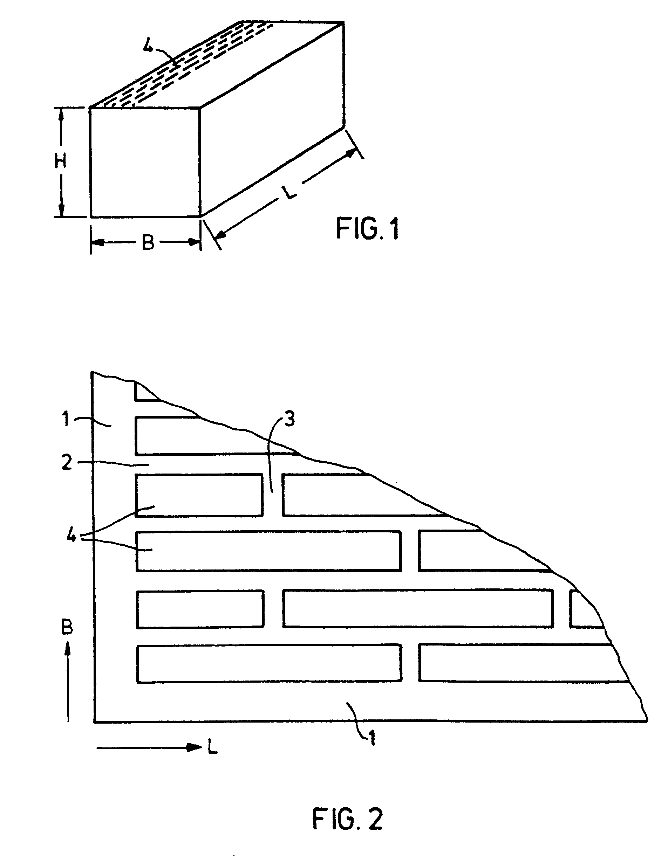

Die Fig. 1 und 2 erläutern den als Euroblock bekannten Ziegel.

Fig. 1 zeigt eine perspektivische Darstellung, H, B und L bezeichnen Höhe, Breite und Länge mit den bevorzugten, eingangs beschriebenen Abmessungen. Die Lochreihen 4 werden etwa maßstabsgetreu in Fig. 2 als Ausschnitt aus der Fläche BxL vergrößert dargestellt. Der Ziegel besteht aus einer dickeren Außenwand 1 von 9 mm Dicke. Die Lochreihen 4 werden durch Stege 2 und 3 gebildet, die bei der erfindungsgemäßen Verwendung der wäßrigen Zubereitungen lediglich eine Dicke von ca. 4 mm benötigen, so daß die Anzahl der Lochreihen auf 22 erhöht werden kann. Die einzelnen Löcher weisen Abmessungen von 9 mm Breite und 64 mm Länge auf.

Im folgenden werden Herstellung und Wirkung der Porosierungsmittel beispielhaft erläutert: Die angegebenen Teile und Prozente beziehen sich auf das Gewicht, sofern nicht anders erläutert.

## Beispiel 1

### a) Herstellung des Prepolymers

Eine Mischung aus 150 Gew.-Teilen Toluylendiisocyanat (80% 2,4- und 20% 2,6-Isomeres) und 1200 Gew.-Teilen eines Polyethers, der durch Anlagerung von 60 Gew.-% Ethylenoxid und 40 Gew.-% Propylenoxid an Glyzerin erhalten worden ist und eine Hydroxylzahl von 28 besitzt, wird unter Rühren innerhalb von 30 Minuten auf 80°C erwärmt. Bei dieser Temperatur wird die Reaktionsmischung weitere 3 Stunden gerührt und dann auf Raumtemperatur abgekühlt. Das erhaltene Prepolymer hat einen Isocyanatgehalt von 3,7% und eine Viskosität von 9500 mPa · s bei 25°C.

### b) Herstellung der wäßrigen Zubereitung

In 72,3 Teile Wasser werden

24,1 Teile Heizöl El gegeben und 0,5 Minuten mechanisch bei 2000 U/min gerührt. Unter weiterem Rühren werden in die Mischung

3,6 Teile des nach a) erhaltenen Prepolymers gegeben und nach Zugabeende weitere 5 Minuten bei 4000 U/min gerührt. Es bildet sich innerhalb von 10 Minuten ein Gel.

## Beispiel 2

Die im Beispiel 1b verwendeten Mischungskomponenten werden in verschiedenen Verhältnissen in der gleichen Verfahrensweise Beispiel 1b gemischt. Man erhält jeweils ein Gel.

| | Versuch | | | | | | | |
| --- | --- | --- | --- | --- | --- | --- | --- | --- |
| | 1 | 2 | 3 | 4 | 5 | 6 | 7 | 8 |
| Wasser | 77,1 | 81,9 | 86,7 | 67,5 | 87,3 | 82,5 | 77,7 | 72,8 |
| Heizöl | 19,3 | 14,5 | 9,7 | 28,9 | 9,7 | 14,5 | 19,3 | 24,2 |
| Prepolymer | 3,6 | 3,6 | 3,6 | 3,6 | 3,0 | 3,0 | 3,0 | 3,0 |

## Beispiel 3

In 93,7 Teile einer 2,5%igen wäßrigen Stärkelösung (Kartoffelstärke) werden

3,15 Teile Heizöl EL gegeben und 0,5 Minuten mechanisch gerührt. Unter weiterem Rühren werden in die Mischung

3,15 Teile des nach Beispiel 1a) erhaltenen Prepolymers gegeben und nach Zugabeende weitere 5 Minuten bei 4000 U/min gerührt. Innerhalb weiterer 10 Minuten bildet sich ein Gel.

## Beispiel 4

Die im Beispiel 3 verwendeten Mischungskomponenten werden in verschiedenen Verhältnissen in der gleichen Verfahrensweise Beispiel 3 gemischt. Man erhält jeweils ein Gel.

| Versuch | 1 | 2 | 3 | 4 |
|---|---|---|---|---|
| Stärkelösung | 90,6 | 87,5 | 84,35 | 81,35 |
| Heizöl | 6,25 | 9,35 | 12,5 | 15,5 |
| Prepolymer | 3,15 | 3,15 | 3,15 | 3,15 |

## Beispiel 5

In 72,9 Teile Wasser werden nacheinander
24,3 Teile Heizöl EC und
1,2 Teile Emulgator (Amid-Ölsäure-Basis) gegeben und 2 Minuten mechanisch bei 3000 U/min gerührt. Unter weiterem Rühren werden in die Mischung
1,6 Teile des nach Beispiel 1a) erhaltenen Prepolymers gegeben und nach Zugabeende weitere 6 Minuten bei 4000 U/min gerührt. Es bildet sich innerhalb von 10 Minuten ein Gel.

## Beispiel 6

In 87,0 Teile einer 0,3%igen wäßrigen Polyvinylalkohollösung werden nacheinander
0,5 Teile Carboxymethylcellulose (CMC)
Substitutionsgrad: 0,4—0,6
Viskosität: ca. 200 mPa · s
(gemessen an 2%iger wäßriger Lösung bei 20° C nach Haake)
9,5 Teile Heizöl EL und
3,0 Teile des nach Beispiel 1a) erhaltenen Prepolymers gegeben und 60 Sekunden bei 800 U/min gerührt. Innerhalb von 15 Minuten bildet sich ein Gel.

## Beispiel 7

Die im Beispiel 6 verwendeten Mischungskomponenten werden in verschiedenen Verhältnissen in der gleichen Verfahrensweise Beispiel 6 gemischt. Man erhält jeweils ein Gel.

| Versuch | 1 | 2 | 3 |
|---|---|---|---|
| Wasser | — | 43,4 | 28,9 |
| PVA-Lösung | 86,5 | 43,4 | 57,9 |
| CMC | 1,0 | 0,5 | 0,5 |
| Heizöl | 9,5 | 9,6 | 9,6 |
| Prepolymer | 3,0 | 3,1 | 3,1 |

## Beispiel 8

In 14,7 Teile einer 3%igen wäßrigen Carboxymethylcellulose-Lösung (Viskosität der Carboxymethylcellulose: ca. 30 mPa · s, gemessen an 2%iger wäßriger Lösung bei 20° C nach Haake) werden nacheinander
73,5 Teile entmineralisiertes Wasser (15° C)
9,4 Teile Heizöl EL und
2,4 Teile des nach Beispiel 1a) erhaltenen Prepolymers gegeben und 1 Minute mechanisch bei 600 U/min gerührt. Innerhalb von 15 Minuten bildet sich ein Gel.

**0 083 003**

Beispiel 9

Die im Beispiel 8 verwendeten Mischungskomponente werden in verschiedenen Verhältnissen nach der gleichen Verfahrensweise Beispiel 8 gemischt. Man erhält jeweils ein Gel.

| | Versuch 1 | 2 | 3 | 4 | 5 | 6 | 7 |
|---|---|---|---|---|---|---|---|
| CMC-Lösung | 15,33 | 15,7 | 16,33 | 16,00 | 15,0 | 14,0 | 27,0 |
| Wasser | 72,77 | 72,4 | 71,77 | 71,80 | 72,8 | 73,8 | 61,4 |
| Heizöl | 9,5 | 9,5 | 9,5 | 10,0 | 10,0 | 10,0 | 9,6 |
| Prepolymer | 2,4 | 2,4 | 2,4 | 2,2 | 2,2 | 2,2 | 2,0 |

Beispiel 10

In 14,63 Teile einer 3%igen wäßrigen Carboxy-methylcellulose-Lösung (Viskosität der Carboxyme-thylcellulose: ca. 30 mPa · s, gemessen an 2%iger Lösung bei 20° C nach Haake)
73,55 Teile entmineralisiertes Wasser (10° C)
9,42 Teile Spindelöl (ISO VG 22 DIN 51 519) und
2,40 Teile des nach Beispiel 1a) erhaltenen Prepolymers gegeben und 1 Minute mechanisch bei 600 U/min gerührt. Innerhalb von 15 Minuten bildet sich ein Gel.

Beispiel 11

Die im Beispiel 10 verwendeten Mischungskomponenten werden in verschiedenen Verhältnissen nach der gleichen Verfahrensweise Beispiel 10 gemischt. Man erhält jeweils ein Gel.

| | Versuch 1 | 2 | 3 | 4 | 5 | 6 | 7 | 8 |
|---|---|---|---|---|---|---|---|---|
| CMC-Lösung | 14,68 | 14,76 | 17,00 | 17,05 | 17,06 | 17,14 | 17,10 | 13,34 |
| Wasser | 73,85 | 74,22 | 70,44 | 70,51 | 70,58 | 70,56 | 70,72 | 74,16 |
| Spindelöl | 9,45 | 9,50 | 10,04 | 10,03 | 10,04 | 10,08 | 10,06 | 10,00 |
| Prepolymer | 2,02 | 1,52 | 2,52 | 2,41 | 2,32 | 2,22 | 2,12 | 2,50 |

Beispiel 12

In 34,75 Teile einer 0,3%igen wäßrigen Polyvinyl-Alkohol-Lösung werden nacheinander
34,75 Teile entmineralisiertes Wasser
28,09 Teile Spindelöl (ISO VG 22 DIN 51 519) und
2,41 Teile des nach Beispiel 1a) erhaltenen Prepolymers gegeben und bei 600 U/min 45 Sekunden mechanisch gerührt. Innerhalb von 10 Minuten bildet sich ein Gel.

Beispiel 13

Die im Beispiel 12 verwendeten Mischungskomponenten werden in verschiedenen Verhältnissen nach der gleichen Verfahrensweise Beispiel 12 gemischt. Man erhält jeweils ein Gel.

7

| | Versuch 1 | 2 | 3 | 4 | 5 | 6 | 7 |
|---|---|---|---|---|---|---|---|
| PVA-Lösung | 33,41 | 32,17 | 29,95 | 28,63 | 26,31 | 25,53 | — |
| Wasser | 33,41 | 32,17 | 29,95 | 28,63 | 26,31 | 25,53 | 50,19 |
| Spindelöl | 30,86 | 33,43 | 38,04 | 40,77 | 45,56 | 47,17 | 46,33 |
| Prepolymer | 2,32 | 2,23 | 2,06 | 1,97 | 1,82 | 1,77 | 3,48 |

## Beispiel 14

### a) Herstellen und Homogenisieren der keramischen Masse

Ein illitisch-serizitischer Ton mit einem geringen Anteil an Kaolinit-Fire Clay wurde mittels Feinwalzwerk und Siebrundbeschicker (Fabrikat: Rieterwerke Dipl.-Ing. Walter Händle, Konstanz) labormäßig aufbereitet und homogenisiert und auf eine Steife von ca. 27 mm Pfefferkorn-Resthöhe eingestellt.

Zu 100 Volumenteilen der erhaltenen Tonmasse (Dichte 1,9 g/cm$^3$) wurden 30 Volumenteile der nach Beispiel 1b) erhaltenen erfindungsgemäßen gelartigen Mischung gegeben und ein weiteres Mal im Siebrundbeschicker gemischt und homogenisiert.

### b) Herstellen der Ziegel

Die nach a) erhaltene Tonmasse wurde mit einer Labor-Ziegelpresse (Typ Laborvakuum-Aggregat KLVA 80) zu Lochsteinen mit ca. 15% Lochanteil, bezogen auf den Querschnitt, verpreßt und bis zum Erreichen ihrer Ausgleichsfeuchte bei Raumtemperatur offen gelagert.

Anschließend wurden die Formlinge im Trockenschrank 8 Stunden erwärmt und dann im Elektroofen mit einer Aufheizgeschwindigkeit von 80° C/Stunde auf 950° C erhitzt. Diese Temperatur wurde 4 Stunden gehalten. Die Abkühlung erfolgte gemäß dem natürlichen Erkalten des Ofens.

An den 3 Tage bei Raumtemperatur gelagerten Ziegeln wurden folgende Werte ermittelt:

Gesamtschwindung: 8,35% (linear)
Scherbendichte: 1,68 g/cm$^3$
Steinfestigkeit: 30,5 N/mm$^2$ (Mittelwert)

(gemessen an 10 Prüfkörpern h = 55 mm, l = 57 mm, b = 27 mm)

Ebenfalls ermittelt wurden:

Anmachwassergehalt: 34,1% (atro)
Steife (Pfefferkorn): 11,7 mm
Trockenzeit: 64 h

## Beispiel 15 (Vergleich)

Gemäß der Verfahrensweise Beispiel 14 wurden zu 100 Volumenteilen des gleichen Tones 30 Volumenteile Polystyrol-Partikel (Durchmesser 3—5 mm, Hersteller BASF AG) gegeben und zu Ziegeln verarbeitet. Die Prüfwerte waren:

Gesamtschwindung: 8,15% (linear)
Scherbendichte: 1,475 g/cm$^3$
Steinfestigkeit: 18,3 N/mm$^2$ (Mittelwert)
Anmachwassergehalt (atro): 23,1%
Steife (Pfefferkorn): 28,0 mm
Trockenzeit: 68,0 h

## Beispiel 16 (Vergleich)

Gemäß der Verfahrensweise Beispiel 14 wurde der gleiche Ton ohne Zusätze zu Ziegeln verarbeitet. Die Prüfwerte waren:

| | |
|---|---|
| Gesamtschwindung: | 8,95% (linear) |
| Scherbendichte: | 1,90 g/cm³ |
| Steinfestigkeit: | 45,0 N/mm² (Mittelwert) |
| Anmachwassergehalt (atro): | 22,6% *) |
| Steife (Pfefferkorn): | 29,2 mm |
| Trockenzeit: | 67 h |

*) atro = auf trockene Masse bezogen

## Beispiel 17

### a) Herstellen und Homogenisieren der keramischen Masse

Zu 100 Volumenteilen eines kaolinitischen, serizitischen Illit enthaltenden Tons wurden 30 Volumenteile der nach Beispiel 2, Versuch 3) erhaltenen erfindungsgemäßen gelartigen Mischung gegeben und in einem Labor-Siebrundbeschicker gemischt und homogenisiert und auf eine Steife von ca. 29 mm Pfefferkorn-Resthöhe eingestellt.

### b) Herstellen der Ziegel

Die nach a) erhaltene Tonmasse (Dichte 1,8 g/cm³) wurde gemäß der Verfahrensweise Beispiel 14b) zu Ziegeln verarbeitet. Die Prüfwerte waren:

| | |
|---|---|
| Gesamtschwindung: | 8,3% (linear) |
| Scherbendichte: | 1,47 g/cm³ |
| Steinfestigkeit: | 84,5 N/mm² (Mittelwert) |
| Anmachwassergehalt (atro): | 26,6% |
| Trockenzeit: | 29 h |

## Beispiel 18

Gemäß der Verfahrensweise Beispiel 17 wurden zu 100 Volumenteilen des gleichen Tons 64 Volumenteile der nach Beispiel 2, Versuch 3) erhaltenen erfindungsgemäßen Mischung gegeben und zu Ziegeln verarbeitet. Die Prüfwerte waren:

| | |
|---|---|
| Gesamtschwindung: | 7,5% (linear) |
| Scherbendichte: | 1,41 g/cm³ |
| Steinfestigkeit: | 30,8 N/mm² (Mittelwert) |
| Anmachwassergehalt (atro): | 30,0% |
| Trockenzeit: | 28 h |

## Beispiel 19 (Vergleich)

Gemäß der Verfahrensweise Beispiel 17 wurde der gleiche Ton ohne Zusatz der erfindungsgemäßen gelartigen Mischung zu Ziegeln verarbeitet. Die Prüfwerte waren:

| | |
|---|---|
| Gesamtschwindung: | 8,9% (linear) |
| Scherbendichte: | 1,65 g/cm³ |
| Steinfestigkeit: | 88,5 N/mm² (Mittelwert) |
| Anmachwassergehalt (atro): | 22% |
| Trockenzeit: | 49 h |

## Beispiel 20

Zu 100 Volumenteilen einer Löß/Tonmischung (40 Gew.-Teile Lößlehm, 88% 0,2 mm, 45% 0,02 mm Teilchengröße und 60% Gew.-Teile Opalinuston 98% 0,20 mm, 62% 0,02 mm Teilchengröße), die, auf die trockene Löß/Tonmischung bezogen, ca. 17% Wasser enthält, wurden 30 Volumenteile der nach Beispiel 10 erhaltenen erfindungsgemäßen gelartigen Mischung gegeben und gemäß der Verfahrensweise Beispiels 17 zu Ziegeln verarbeitet. Die Prüfwerte waren:

9

| | |
|---|---|
| Gesamtschwindung: | ca. 7,8% (linear) |
| Scherbendichte: | 1,68 g/cm$^3$ |
| Steinfestigkeit: | 22,0 N/mm$^2$ (Mittelwert) |

## Beispiel 21 (Vergleich)

Gemäß der Verfahrensweise Beispiel 17 wurde der gleiche Ton gemäß Beispiel 20 ohne Zusatz der erfindungsgemäßen gelartigen Mischung zu Ziegeln verarbeitet. Die Prüfwerte waren:

| | |
|---|---|
| Gesamtschwindung: | 8,2% (linear) |
| Scherbendichte: | 1,84 g/cm$^3$ |
| Steinfestigkeit: | 64,0 N/mm$^2$ (Mittelwert) |

## Beispiel 22

In 72 Teile Wasser von 10°C werden
12 Teile Heizöl EL und
20 Teile Braunkohlenstaub (Korngröße: 80% < 90 µm) gegeben und 1 Minute bei 4000 U/min mechanisch vermischt. Unter weiterem Rühren werden in diese Mischung
3 Teile des nach Beispiel 1a) erhaltenen Prepolymers gegeben und weitere 2 Minuten gerührt. Es bildet sich innerhalb von 6 Minuten ein Gel.

## Patentansprüche

1. Wäßrige Zubereitungen mit gelartiger Konsistenz, enthaltend

A) 1—15 Gew.-% hydrophile Polyurethane,
B) gegebenenfalls bis zu 3 Gew.-% hydrophile, wasserlösliche oder wasserquellbare Polymerisate auf Basis von Polypeptiden; Polysacchariden wie Casein, Gelatine, Alginate, Carrageenate, Xanthane, Stärken, Chitin; Cellulosen wie Carboxymethylcellulose, Methylcellulose oder Hydroxyethylcellulose, und Polymere auf Basis von ungesättigten Monomeren wie Polyvinylalkohole,
C) gegebenenfalls bis zu 2 Gew.-% Tenside,
D) gegebenenfalls bis zu 30 Gew.-% pulverförmige Füllstoffe,
E) 0,3—30 Gew.-% Öl.

2. Verwendung von wäßrigen Zubereitungen als Porosierungsmittel von keramischen Massen, dadurch gekennzeichnet, daß man ölhaltige, wäßrige Zubereitungen mit gelartiger Konsistenz gemäß Anspruch 1 als Zusatzmittel den keramischen Rohmassen während des Aufbereitungsprozesses in Mengen von 5—50 Gew.-% zumischt.

## Claims

1. Aqueous preparations of a gel-like consistency, containing

A) 1—15% by weight of hydrophilic polyurethanes,
B) optionally up to 3% by weight of hydrophilic polymers which are water-soluble or capable of swelling in water, based on polypeptides; polysaccharides such as casein, gelatine, alginates, carrageenates, xanthanes, starches, chitin; celluloses such as carboxymethylcellulose, methyl cellulose or hydroxyethyl cellulose, and polymers based on unsaturated monomers such as polyvinyl alcohols,
C) optionally up to 2% by weight of surface-active agents,
D) optionally up to 30% by weight of pulverulent fillers and
E) 0.3—30% by weight of oil.

2. Use of aqueous preparations as porosifying agents for ceramic masses, characterised in that oil-containing, aqueous preparations of a gel-like consistency according to Claim 1 are introduced as additives into the ceramic raw masses during the process of preparation in quantities of 5—50% by weight.

**0 083 003**

**Revendications**

1. Compositions aqueuses de constitance gélatineuse contenant:

A) 1—15% en poids de polyuréthannes hydrophiles,
B) éventuellement jusqu'à 3% en poids de polymères hydrophiles, solubles ou gonflables dans l'eau, à base de polypeptides; de polysaccharides tels que caséines, gélatines, alginates, carraghénates, xanthanes, amidons, chitine; de celluloses telles que carboxyméthylcellulose, méthylcellulose ou hydroxyéthylcellulose, et de polymères à base de monomères insaturés tels que des alcools polyvinyliques;
C) éventuellement jusqu'à 2% en poids de tensioactifs;
D) éventuellement jusqu'à 30% en poids de charges pulvérulentes;
E) 0,3—30% en poids d'huile.

2. Utilisation de compositions aqueuses comme agent de porosité pour masses céramiques, caractérisée en ce que l'on ajoute comme additifs pendant le procédé de fabrication aux masses brutes céramiques des compositions aqueuses de consistance gélatineuse, contenant de l'huile, selon la revendication 1 en quantités de 5—50% en poids.

11

FIG. 1

FIG. 2